# EUROPEAN PATENT APPLICATION

(11) **EP 4 675 723 A1**
(43) Date of publication of application: **07.01.2026**
(21) Application number: 24763501.4
(22) Date of filing: 02.02.2024
(51) Int. Cl.: H01M 10/04, H01M 4/13, H01M 10/0587

(54) **SECONDARY BATTERY**

(30) Priority: 28.02.2023 JP 2023030236
(71) Applicant: Panasonic Energy Co., Ltd., Osaka 570-8511 (JP)
(72) Inventor: NAMBUYA, Arisa, Kadoma-shi, Osaka 571-0057 (JP)
(74) Representative: Novagraaf International SA
(86) International application number: PCT/JP2024/003398
(87) International publication number: WO 2024/181017

(57) **Abstract**

A cylindrical battery (1) comprises an electrode body (10). A positive electrode (11) constituting the electrode body (10) includes an elongated positive electrode core body (13), and a positive electrode mixture layer (14) disposed on the positive electrode core body (13). A plurality of exposed portions (15) where the surface of the positive electrode core body (13) is exposed are provided on the width-direction end of the positive electrode (11) in the length direction of the positive electrode (11). The plurality of exposed portions (15) include a first exposed portion group having, counting from the inner peripheral side of the electrode body 10, first to third exposed portions, and a second exposed portion group having fourth and greater exposed portions, and an average value (L1) of the length of the exposed portions (15) constituting the first exposed portion group is less than an average value (L2) of the length of the exposed portions (15) constituting the second exposed portion group.

## Description

### TECHNICAL FIELD

The present disclosure relates to a secondary battery, and more particularly to a secondary battery comprising a spiral-type electrode assembly in which a positive electrode and a negative electrode are wound with an interposed separator.

### BACKGROUND

In recent years, secondary batteries such as lithium ion batteries have been widely used in applications requiring high capacity, high durability, rapid charging performance, and the like, such as in-vehicle applications and power storage applications. The positive electrode active material, which is a main constituent element of secondary batteries, has a significant effect on such battery performance, and many studies have therefore been conducted on positive electrode active materials. In general, a positive electrode has a structure in which a mixture layer containing a positive electrode active material is formed on a core made of a metal foil. For example, Patent Literature 1 discloses a positive electrode having a plurality of leads welded at intervals along the longitudinal direction of the positive electrode.

When joining a plurality of leads to the positive electrode at intervals along the longitudinal direction as in the positive electrode disclosed in Patent Literature 1, as the portions for joining the leads, exposed portions where the surface of the positive electrode core is exposed must be formed in a plural number along the longitudinal direction. Although a strip-shaped exposed portion that is continuous in the longitudinal direction is formed at a widthwise end part in the positive electrode of Patent Literature 1, from the perspective of achieving a high battery capacity, the area of the exposed portion is preferably kept to the minimum size required. Specifically, one may consider to arrange exposed portions and the mixture layer alternately in the longitudinal direction at a widthwise end part of the positive electrode.

### CITATION LIST

### PATENT LITERATURE

PATENT LITERATURE 1: Japanese Unexamined Patent Application Publication No. 2001-176489

### SUMMARY

However, when an electrode assembly is produced using a positive electrode in which exposed portions of the core and the mixture layer are arranged alternately in the longitudinal direction at a widthwise end part of the positive electrode, it is considered that a large difference in surface pressure occurs at the time of charging and discharging between the widthwise end part of the positive electrode and other portions, i.e., portions where the positive electrode mixture layer is continuously provided in the longitudinal direction. As a result, at a part corresponding to the widthwise end part of the positive electrode, a gap may be formed between electrode plates constituting the electrode assembly. If such a gap is formed, for example, there would be a risk that peeling of the mixture layer may occur during charge-discharge cycles.

On the other hand, if the length of the exposed portions is simply reduced, there may be cases where an intended lead arrangement (or layout) cannot be realized when forming the spiral electrode assembly structure. For example, each lead is to be arranged within a predetermined angular range around the winding center, but if the length of the exposed portion serving as the connection point for the lead is too short, there may be cases where the lead cannot be arranged within this angular range due to factors such as variations in the thickness of the electrode plates.

A secondary battery according to the present disclosure is a secondary battery comprising an electrode assembly which includes a positive electrode, a negative electrode, and a separator, and in which the positive electrode and the negative electrode are wound with the separator interposed. The positive electrode has an elongate positive electrode core and a positive electrode mixture layer provided on the positive electrode core. At a widthwise end part of the positive electrode, exposed portions where a surface of the positive electrode core is exposed are provided at four or more positions spaced apart from each other in a longitudinal direction. The exposed portions include a first group of exposed portions composed of first to third exposed portions as counted from an inner periphery side of the electrode assembly, and a second group of exposed portions composed of fourth and subsequent exposed portions. An average length of the exposed portions constituting the first group of exposed portions is smaller than an average length of the exposed portions constituting the second group of exposed portions.

According to the secondary battery according to the present disclosure, occurrence of a gap between electrode plates constituting the electrode assembly can be effectively suppressed, and an intended lead arrangement can be easily realized.

### BRIEF DESCRIPTION OF DRAWINGS

FIG. 1 is a cross-sectional view of a secondary battery according to an example embodiment.
FIG. 2 is a front view of a positive electrode according to an example embodiment.

### DESCRIPTION OF EMBODIMENTS

Example embodiments of a secondary battery according to the present disclosure will now be described in detail by reference to the drawings. Configurations obtained by selectively combining the constituent elements of a plurality of embodiments and variants described below are included within the scope of the present disclosure.

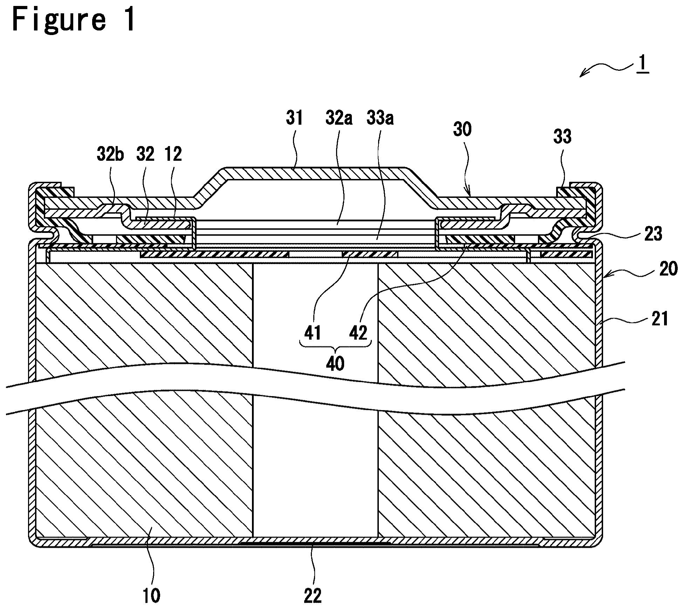

In the embodiments described below, as the secondary battery, a cylindrical battery 10 in which a spiral-type electrode assembly 14 is housed in a bottomed cylindrical outer can 16 will be referred to by way of example. However, the outer casing of the battery is not limited to a cylindrical outer can, and the form of the cylindrical battery is likewise not limited to that shown by way of example in FIG. 1. Other embodiments of the secondary battery according to the present disclosure include a rectangular battery having a rectangular outer can, and a pouch-type battery having an outer casing composed of a laminate sheet including a metal layer and a resin layer. Furthermore, while the electrolyte may be an aqueous electrolyte, a non-aqueous electrolyte is used in the present embodiment.

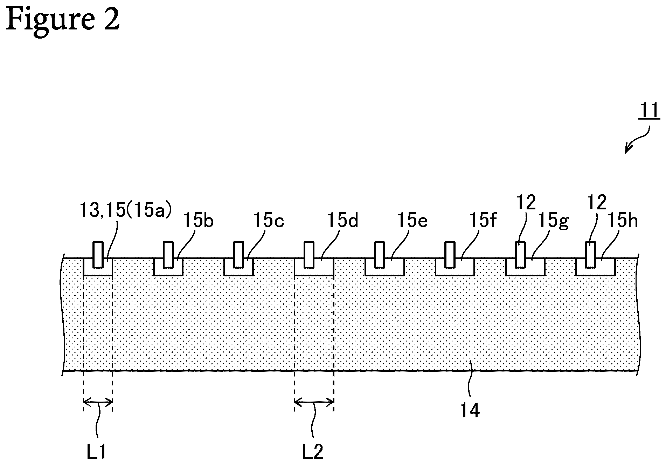

FIG. 1 is a cross-sectional view of a cylindrical battery 1 according to an example embodiment. As shown in FIG. 1, the cylindrical battery 1 comprises an electrode assembly 10, a non-aqueous electrolyte, a bottomed cylindrical outer can 20 that houses the electrode assembly 10 and the non-aqueous electrolyte, and a sealing assembly 30 that closes the opening of the outer can 20. The outer can 20 has a grooved portion 23 formed in its side wall 21, and the sealing assembly 30 closes the opening of the outer can 20 by being supported on the grooved portion 23. The electrode assembly 10 comprises a positive electrode 11 (see FIG. 2 described later), a negative electrode, and a separator, and has a structure formed by spirally winding the positive electrode 11 and the negative electrode with the separator interposed. In the following, for convenience of explanation, the side of the cylindrical battery 1 toward the sealing assembly 30 will be referred to as "upper", and the side toward the can bottom 22 of the outer can 20 will be referred to as "lower".

The cylindrical battery 1 further comprises positive electrode leads 12 connecting between the positive electrode and a current collector plate 32 of the sealing assembly 30, and an upper insulating plate 40 provided between the electrode assembly 10 and the sealing assembly 30. In the present embodiment, the positive electrode leads 12 electrically connect between the positive electrode and the sealing assembly 30, and a negative electrode lead electrically connects between the negative electrode and the outer can 20. Accordingly, the sealing assembly 30 functions as the positive electrode external terminal, and the outer can 20 functions as the negative electrode external terminal. The cylindrical battery 1 may have a lower insulating plate provided between the electrode assembly 10 and the can bottom 22.

As will be described in more detail later, the cylindrical battery 1 has a plurality of positive electrode leads 12. As the portions for joining the positive electrode leads 12, at a widthwise end part of the positive electrode, exposed portions where the surface of the positive electrode core is exposed are provided in a plural number along the longitudinal direction of the positive electrode. In the present embodiment, the upper insulating plate 40 includes a first insulating plate 41 and a second insulating plate 42 located closer to the sealing assembly 30 than is the first insulating plate 41. The first insulating plate 41 is interposed between the electrode assembly 10 and the positive electrode leads 12, and prevents contact between the negative electrode and the positive electrode leads 12. The second insulating plate 42 is interposed between the grooved portion 23 of the outer can 20 and the positive electrode leads 12, and prevents contact between the outer can 20, which serves as the negative electrode external terminal, and the positive electrode leads 12.

The non-aqueous electrolyte has ionic conductivity. The non-aqueous electrolyte may be either a liquid electrolyte (or electrolyte solution) or a solid electrolyte.

The liquid electrolyte (or electrolyte solution) contains a non-aqueous solvent and an electrolyte salt dissolved in the non-aqueous solvent. As the non-aqueous solvent, for example, esters, ethers, nitriles, amides, a mixed solvent containing two or more of the foregoing, and the like are used. Examples of the non-aqueous solvent include ethylene carbonate (EC), ethyl methyl carbonate (EMC), dimethyl carbonate (DMC), diethyl carbonate (DEC), and a mixed solvent containing the foregoing solvents. The non-aqueous solvent may contain a halogen-substituted product (such as fluoroethylene carbonate) obtained by substituting at least part of hydrogen atoms in the above solvents with halogen atoms such as fluorine. As the electrolyte salt, for example, a lithium salt such as LiPF₆ is used.

As the solid electrolyte, for example, a solid or gel polymer electrolyte, an inorganic solid electrolyte, and the like can be used. As the inorganic solid electrolyte, it is possible to use a material known for use in all-solid-state lithium ion secondary batteries and the like (such as an oxide-based solid electrolyte, a sulfide-based solid electrolyte, or a halogen-based solid electrolyte). The polymer electrolyte contains, for example, a lithium salt and a matrix polymer, or alternatively contains a non-aqueous solvent, a lithium salt, and a matrix polymer. As the matrix polymer, for example, a polymer material that absorbs a non-aqueous solvent and forms a gel is used. Examples of the polymer material include fluororesins, acrylic resins, and polyether resins.

The positive electrode, the negative electrode, and the separator, which constitute the electrode assembly 10, are all elongate strip-shaped members, and are alternately laminated in the radial direction of the electrode assembly 10 by being wound in a spiral shape. The negative electrode is formed to have a size slightly larger than the positive electrode in order to prevent lithium deposition. That is, the negative electrode is formed to be longer than the positive electrode in the longitudinal direction and in the width direction. The separator is formed to have a size slightly larger than at least the positive electrode, and, for example, two sheets of the separator are arranged so as to sandwich the positive electrode. The electrode assembly 10 has positive electrode leads 12 connected to the positive electrode by welding or the like, and a negative electrode lead connected to the negative electrode by welding or the like.

The diameter of the electrode assembly 10 is, for example, greater than or equal to 15 mm and less than or equal to 100 mm. When the diameter of the electrode assembly 10 is within this range, the positive electrode configuration according to the present disclosure is more effective. A suitable example of the diameter of the electrode assembly 10 is greater than or equal to 20 mm and less than or equal to 80 mm, or greater than or equal to 40 mm and less than or equal to 70 mm. The diameter of the electrode assembly 10 mainly depends on the length of the electrode plates.

The positive electrode comprises a positive electrode core and a positive electrode mixture layer provided on the positive electrode core. As the positive electrode core, it is possible to use a foil of a metal such as aluminum, aluminum alloy, stainless steel, or titanium that is stable in the potential range of the positive electrode, a film having such metal provided on its surface layer, and the like. The positive electrode mixture layer contains a positive electrode active material, a conductive agent, and a binder, and is preferably formed on both sides of the positive electrode core in areas other than the portions to which the positive electrode leads 12 are connected. As the positive electrode active material, a lithium transition metal composite oxide containing transition metal elements such as Ni, Co, and Mn is used.

The negative electrode comprises a negative electrode core and a negative electrode mixture layer provided on the negative electrode core. As the negative electrode core, it is possible to use a foil of a metal such as copper, copper alloy, stainless steel, nickel, or nickel alloy that is stable in the potential range of the negative electrode, a film having such metal provided on its surface layer, and the like. The negative electrode mixture layer contains a negative electrode active material and a binder, and is preferably formed on both sides of the negative electrode core in areas other than the portion to which the negative electrode lead is connected. As the negative electrode active material, a carbon material that reversibly occludes and releases lithium ions is generally used. As the negative electrode active material, it is also possible to use an element such as Si or Sn that forms an alloy with Li, a material containing such element, and the like.

As the separator, a porous sheet having ion permeability and insulating property is used. Specific examples of the porous sheet include a microporous thin film, a woven fabric, and a non-woven fabric. As the material of the separator, polyolefins such as polyethylene and polypropylene, cellulose, and the like are suitable. The separator may have either a single-layer structure or a multi-layer structure. For example, the separator may have a multi-layer structure including a thermoplastic resin layer made of polyolefin or the like and a cellulose fiber layer, a two-layer structure composed of polyethylene (PE) and polypropylene (PP), or a three-layer structure composed of PE, PP, and PE.

The outer can 20 is a bottomed cylindrical metal container having an opening at one axial end (or upper end), and comprises a side wall 21 formed in a cylindrical shape, and a can bottom 22 having a circular shape in bottom view. The outer can 20 is generally composed of a metal containing iron as the main component, but may alternatively be composed of a metal containing aluminum or the like as the main component. The outer can 20 has a grooved portion 23 formed in the side wall 21 along the circumferential direction. The grooved portion 23 is formed near the opening of the outer can 20 at a position spaced by a predetermined length from the edge of the opening (or the upper end of the outer can 20). In the present embodiment, a safety vent is formed in the can bottom 22 of the outer can 20 for releasing gas when the internal pressure increases upon occurrence of an abnormality.

The grooved portion 23 is a portion of the side wall 21 that protrudes inward of the outer can 20, and is formed, for example, by subjecting the side wall 21 to a spinning process from the outside. At the position where the grooved portion 23 is formed, the outer can 20 is reduced in diameter, and a groove in the shape of a thin line is formed on the outer peripheral surface of the side wall 21. It is preferable that the grooved portion 23 has a generally U-shaped cross section and is formed in an annular shape over the entire circumference of the side wall 21. The grooved portion 23 is formed by processing the side wall 21 after the electrode assembly 10 is placed inside the outer can 20.

The sealing assembly 30 comprises a cap 31, a current collector plate 32, and a gasket 33, and is formed in a disk shape as a whole. The sealing assembly 30 is arranged on the grooved portion 23 of the outer can 20 and fixed to an upper end part of the outer can 20. The upper end part of the outer can 20 is bent inward and crimped against the sealing assembly 30. In other words, the sealing assembly 30 is fixed to the upper end part of the outer can 20 by means of the grooved portion 23 and the crimped portion of the outer can 20, and closes the opening of the outer can 20. The crimped portion is formed in an annular shape along the circumferential direction of the outer can 20, and holds the sealing assembly 30 in cooperation with the grooved portion 23.

The cap 31 is a disk-shaped metal member that is exposed to the outside of the outer can 20 and constitutes the top face of the cylindrical battery 1. The cap 31 has a shape in which its radially central part protrudes outward of the cylindrical battery 1. When incorporating the cylindrical battery 1 into a module to form a battery pack, a wiring member is connected to the cap 31. As such, the cap 31 functions as an external terminal of the cylindrical battery 1, and is also referred to as an external terminal or a top cover. In the present embodiment, the positive electrode leads 12 are connected to the current collector plate 32, and the cap 31 functions as the positive electrode external terminal.

The current collector plate 32 is a metal member having a diameter approximately equal to that of the cap 31, and is located closer to the electrode assembly 10 than is the cap 31. The current collector plate 32 has an opening 32a in its radially central part, and is formed in a ring shape. The cap 31 and the current collector plate 32 are welded together, and, for example, the current collector plate 32 is welded to the cap 31 at a position closer to the outer circumferential edge than to the radially central part. A projection 32b is formed in the current collector plate 32, and this projection 32b serves as the portion welded to the cap 31.

The gasket 33 is provided at the outer periphery of a laminated member composed of the cap 31 and the current collector plate 32. The gasket 33 is a resin member for hermetically sealing the inside of the battery, and for preventing the cap 31 and the current collector plate 32 from being in contact with the outer can 20 to thereby ensure insulation between the outer can 20 and the sealing assembly 30. The gasket 33 is a ring-shaped resin member, and has an opening 33a formed in its radially central part, which vertically overlaps with the opening 32a of the current collector plate 32.

The positive electrode 11 constituting the electrode assembly 10 will now be described in detail by reference to FIG. 2. FIG. 2 is a front view of the positive electrode 11 to which the positive electrode leads 12 are connected, and shows the positive electrode 11 in the developed state.

As shown in FIG. 2, the positive electrode 11 is an elongate strip-shaped member, and a plurality of positive electrode leads 12 are connected to the positive electrode 11 at predetermined intervals along the longitudinal direction. As described above, the positive electrode 11 includes an elongate positive electrode core 13 and a positive electrode mixture layer 14 provided on both sides of the positive electrode core 13. Further, at a widthwise end part of the positive electrode 11, as the portions to which the positive electrode leads 12 are connected, exposed portions 15 where the surface of the positive electrode core 13 is exposed are provided in a plural number along the longitudinal direction of the positive electrode 11. The plurality of exposed portions 15 are sequentially arranged in one row in the longitudinal direction of the positive electrode 11 at one end part of the positive electrode 11 in the width direction (i.e., one widthwise end part), which is located toward the upper end of the electrode assembly 10.

The longitudinal direction of the positive electrode 11 is a first direction which is along the horizontal direction in FIG. 2, and the width direction of the positive electrode 11 is a second direction which is along the vertical direction in FIG. 2 and perpendicular to the first direction. The length (i.e., the length in the first direction) of the positive electrode 11 is, for example, greater than or equal to 10 times and less than or equal to 100 times the width (i.e., the length in the second direction) of the positive electrode 11, and is, in one example, greater than or equal to 600 mm and less than or equal to 6000 mm. The width of the positive electrode 11 is, for example, greater than or equal to 50 mm and less than or equal to 100 mm, and is uniform over the entire length.

Each positive electrode lead 12 is a rectangular conductive member, and is, for example, composed of a metal containing aluminum as the main component. All of the positive electrode leads 12 extend in the same direction and project upward from the one widthwise end part of the positive electrode 11. In the present embodiment, one longitudinal end of each positive electrode lead 12 is joined to the positive electrode 11, and the other longitudinal end is joined to the current collector plate 32 of the sealing assembly 30. The number of the positive electrode leads 12 is at least four, and is, in one example, greater than or equal to 6 and less than or equal to 10. In the present embodiment, eight positive electrode leads 12 are connected to the positive electrode 11.

The exposed portions 15 are provided in the same number as the positive electrode leads 12. The positive electrode leads 12 are preferably joined to the exposed portions 15 in a one-to-one manner by welding or the like. The positive electrode leads 12 are joined to only one side of the positive electrode core 13, but the exposed portions 15 are provided on both sides of the positive electrode 11. The exposed portions 15 are formed in an overlapping manner in the thickness direction of the positive electrode 11, and formed to have substantially the same size. No limitation is imposed on the joining position of the positive electrode lead 12 in each exposed portion 15, and it is sufficient so long as the positive electrode lead 12 is located within the exposed portion 15 so as not to overlap with the positive electrode mixture layer 14. In the present embodiment, while the widths of the respective positive electrode leads 12 are identical to each other, the lengths may be different from each other.

Each exposed portion 15 preferably has a rectangular shape in front view. The length (hereinafter referred to as "width") of each exposed portion 15 along the width direction of the positive electrode 11 is preferably less than or equal to 25 % of the width of the positive electrode 11, and more preferably greater than or equal to 10 % and less than or equal to 20 % of the width of the positive electrode 11. The widths of the respective exposed portions 15 are preferably identical to each other, and are, in one example, greater than or equal to 7 mm and less than or equal to 15 mm. Each exposed portion 15 is formed to have a uniform width from the one widthwise end of the positive electrode 11. Meanwhile, the lengths of the respective exposed portions 15 along the longitudinal direction of the positive electrode 11 are not uniform. In the present specification, unless otherwise specified, the length of an exposed portion 15 means the length of the exposed portion 15 along the longitudinal direction of the positive electrode 11.

At the one widthwise end part of the positive electrode 11, the exposed portions 15 are provided at four or more positions spaced apart from each other in the longitudinal direction of the positive electrode 11. In the embodiment shown in FIG. 2, eight exposed portions 15 are provided at the one widthwise end part of the positive electrode 11. In FIG. 2, the exposed portion 15 located closest to the inner periphery of the electrode assembly 10 is referred to as "the exposed portion 15a", and the exposed portion 15 located closest to the outer periphery is referred to as "the exposed portion 15h". The intervals between the exposed portions 15 may be uniform or may vary. The layout of the positive electrode leads 12 in the electrode assembly 10, the positions of connection of the positive electrode leads 12 to the current collector plate 32, and the like are set as appropriate according to the battery performance of the cylindrical battery 1, such as the capacity and the output characteristic. Accordingly, the intervals of the exposed portions 15 may be determined according to the layout and the like.

The eight positive electrode leads 12 in total welded to the respective exposed portions 15 in a one-to-one manner are laid out such that, for example, two leads are aligned at each of the positions located every 90° around the central axis of the electrode assembly 10. Specifically, counting from the inner periphery side of the electrode assembly 10, the first and second positive electrode leads 12, the third and fourth positive electrode leads 12, the fifth and sixth positive electrode leads 12, and the seventh and eighth positive electrode leads 12 may be respectively aligned in the radial direction of the electrode assembly 10, and the respective pairs of positive electrode leads 12 may be arranged every 90 ° around the central axis of the electrode assembly 10.

The length of the exposed portions 15 must be greater than the width of the positive electrode leads 12. Meanwhile, from the perspective of achieving a high capacity, the length of the exposed portions 15 are preferably kept to the minimum size required. An example length of the exposed portions 15 is greater than or equal to 5 mm and less than or equal to 70 mm, and preferably greater than or equal to 5 mm and less than or equal to 40 mm. The present inventors have discovered that this length of the exposed portions 15 has a significant influence on occurrence of a gap between the electrode plates constituting the electrode assembly 10. The length of the exposed portions 15 will be described below in detail.

The exposed portions 15 include a first group of exposed portions composed of the first to third exposed portions as counted from the inner periphery side of the electrode assembly 10, and a second group of exposed portions composed of the fourth and subsequent exposed portions. In other words, the first to third exposed portions 15 as counted from the inner periphery side of the electrode assembly 10 are defined as the first group of exposed portions, and the fourth and subsequent exposed portions 15 are defined as the second group of exposed portions. In the present embodiment, the exposed portions 15a, 15b, and 15c constitute the first group of exposed portions, and the exposed portions 15d, 15e, 15f, 15g, and 15h constitute the second group of exposed portions.

The positive electrode 11 is characterized in that the average length (L1) of the exposed portions 15a, 15b, and 15c constituting the first group of exposed portions is smaller than the average length (L2) of the exposed portions 15d, 15e, 15f, 15g, and 15h constituting the second group of exposed portions. With this feature, occurrence of a gap between the electrode plates of the electrode assembly 10 can be effectively suppressed. Since the amount of the positive electrode active material in the one widthwise end part of the positive electrode 11 is less than that in other parts by an amount corresponding to the area of the exposed portions 15, it is considered that a large difference in surface pressure would occur between these parts during charging and discharging of the battery, and as a result, gaps would be likely to occur at the one widthwise end part in the upper end part of the electrode assembly 10. When the condition L1 < L2 is satisfied, it is considered that the surface pressure difference can be alleviated, and occurrence of a gap can be sufficiently suppressed.

In FIG. 2, the exposed portions 15a, 15b, and 15c constituting the first group of exposed portions are shown as having the same length L1, and the exposed portions 15d, 15e, 15f, 15g, and 15h constituting the second group of exposed portions are shown as having the same length L2. The exposed portions 15 in the first group of exposed portions may have the same length, or may have different lengths so long as the condition L1 < L2 is satisfied. Similarly, the exposed portions 15 in the second group of exposed portions may have the same length, or may have different lengths so long as the condition L1 < L2 is satisfied.

The average length (L1) of the exposed portions 15a, 15b, and 15c constituting the first group of exposed portions is preferably greater than or equal to 7 mm and less than or equal to 25 mm, and particularly preferably greater than or equal to 9 mm and less than or equal to 20 mm. When the average value (L1) is within this range, the above-described advantageous effects become more notable. Further, while it is preferable that the average value (L1) is greater than or equal to 9 mm and less than or equal to 20 mm regardless of the diameter of the electrode assembly 10, this range is particularly suitable when the diameter of the electrode assembly 10 is greater than or equal to 40 mm and less than or equal to 80 mm.

The average length (L2) of the exposed portions 15d, 15e, 15f, 15g, and 15h constituting the second group of exposed portions is preferably greater than or equal to 25 mm and less than or equal to 50 mm, and particularly preferably greater than or equal to 30 mm and less than or equal to 40 mm. When the average value (L2) is within this range, the above-described advantageous effects become more notable. Further, while it is preferable that the average value (L2) is greater than or equal to 30 mm and less than or equal to 40 mm regardless of the diameter of the electrode assembly 10, this range is particularly suitable when the diameter of the electrode assembly 10 is greater than or equal to 40 mm and less than or equal to 80 mm.

The ratio (L1/L2) of the average value (L1) to the average value (L2) is preferably greater than or equal to 0.20 and less than or equal to 0.75, more preferably greater than or equal to 0.25 and less than or equal to 0.70, and particularly preferably greater than or equal to 0.30 and less than or equal to 0.55. In that case, the above-described advantageous effects become more notable.

The maximum length of the exposed portions 15a, 15b, and 15c constituting the first group of exposed portions is preferably 25 mm. While the length of any one of the exposed portions 15a, 15b, 15c may be greater than the average length (L2) of the second group of exposed portions, the length is preferably less than or equal to 25 mm. In that case, the above-described advantageous effects become more notable. The minimum length of the exposed portions 15a, 15b, and 15c is set according to the width of the positive electrode leads 12, and is preferably greater than or equal to 10 % and less than or equal to 20 % of the width of the positive electrode leads 12.

When the lengths of the exposed portions 15a, 15b, and 15c are different from each other, each of the lengths is preferably less than the average length (L2) of the second group of exposed portions. The length of each of the exposed portions 15a, 15b, and 15c is preferably greater than or equal to 7 mm and less than or equal to 25 mm, and particularly preferably greater than or equal to 9 mm and less than or equal to 20 mm. In that case, the above-described advantageous effects become more notable. Furthermore, when the lengths of the exposed portions 15d, 15e, 15f, 15g, and 15h are different from each other, each of the lengths is preferably greater than the average length (L1) of the first group of exposed portions.

The first group of exposed portions is provided within a length range of less than or equal to 40 % of the length of the positive electrode 11 from the firstly-wound end of the positive electrode 11. Speaking in terms of the radius of the electrode assembly 14, in a plan view of the electrode assembly 14, the first group of exposed portions is provided within a circle having a radius which extends from the center of the electrode assembly 14 and which is 40 % of the electrode assembly radius. Further, the ratio of the minimum interval between the exposed portions 15a, 15b, and 15c constituting the first group of exposed portions to the maximum interval between the exposed portions 15a, 15b, and 15c is greater than or equal to 80 %. The intervals between the exposed portions 15a, 15b, and 15c may vary depending on the intended lead arrangement and the like, but from the perspective of resistance reduction and the like, the difference in size between the intervals is set to be within 20 %. The intervals between the exposed portions 15a, 15b, and 15c may be substantially the same.

The number of exposed portions 15 constituting the second group of exposed portions is preferably greater than or equal to 3 and less than or equal to 10, and in the present embodiment, the number is five as described above. The intervals between the exposed portions 15a, 15b, and 15c constituting the first group of exposed portions are as described above, and it is preferable that the intervals between the exposed portions 15d, 15e, 15f, 15g, and 15h constituting the second group of exposed portions are similar. That is, the ratio of the minimum interval between the exposed portions 15 constituting the first and second groups of exposed portions to the maximum interval between the exposed portions 15 is preferably greater than or equal to 80 %.

The positive electrode mixture layer 14 is formed by applying a positive electrode mixture slurry containing a positive electrode active material, a conductive agent, and a binder onto both sides of the positive electrode core 13, and drying and compressing the applied coating. At that time, in a part corresponding to the one widthwise end part of the positive electrode 11, the positive electrode mixture slurry is applied intermittently so as to leave portions where the positive electrode mixture layer 14 is not present and the surface of the positive electrode core 13 is exposed. These portions become the exposed portions 15. The positive electrode mixture slurry is applied intermittently such that the above condition L1 < L2 is satisfied.

The positive electrode active material contained in the positive electrode mixture layer 14 is particles of a lithium metal composite oxide containing transition metal elements such as Ni, Co, and Mn. Examples of the metal elements contained in the lithium metal composite oxide include Li, Ni, Co, Mn, Al, Be, B, Na, Mg, Si, K, Ca, Sc, Ti, V, Cr, Fe, Cu, Zn, Ga, Sr, Y, Zr, Nb, Mo, In, Sn, Sb, Ba, Ta, W, Pb, and Bi. The crystal structure of the lithium metal composite oxide is, for example, a layered rock salt structure belonging to the space group R-3m.

The lithium metal composite oxide is, for example, in the form of secondary particles formed by aggregation of a large number of primary particles. The lithium metal composite oxide may alternatively be in the form of non-aggregated particles composed of individual primary particles. As the positive electrode active material, a secondary-particle type composite oxide and a non-aggregated single-particle type composite oxide may be used in combination. Each non-aggregated single particle may contain several (for example, 5 or less) primary particles.

Examples of the conductive agent contained in the positive electrode mixture layer 14 include carbon black such as acetylene black and Ketjenblack, graphite, carbon nanotubes (CNT), carbon nanofibers, graphene, metal fibers, metal powder, and conductive whiskers. One type of conductive agent may be used alone, or two or more types may be used in combination.

Examples of the binder contained in the positive electrode mixture layer 14 include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, and acrylic resins such as polyacrylonitrile (PAN), polyimide, polyamide, and ethylene-acrylic acid copolymer. These resins may be used in combination with carboxymethyl cellulose (CMC) or a salt thereof, polyethylene oxide (PEO), and the like. One type of binder may be used alone, or two or more types may be used in combination.

### EXAMPLES

While the present disclosure will now be further described using Examples, the present disclosure is not limited to these Examples.

### <Example 1>

### [Production of Positive Electrode]

A composite hydroxide containing Ni, Co, and Al in a molar ratio of 85:10:5 was synthesized by a co-precipitation method, and then heat-treated at 600 °C to obtain a composite oxide. In the synthesis of the composite hydroxide, the pH and the amount of the metal salt solution were adjusted so that the D50 of the lithium metal composite oxide to be finally obtained would be approximately 15 µm. The obtained composite oxide and lithium hydroxide were mixed such that the molar ratio (or Li/Me ratio) of the metal elements (Me) in the composite oxide and Li in the lithium hydroxide was 1:1.020. This mixture was placed in a firing furnace and fired in two steps.

In the firing process, the mixture was heated in an oxygen stream having an oxygen concentration of 95 % (with a flow rate of 2 mL/min per 10 cm³ and 5 L/min per 1 kg of the mixture) from room temperature to 650 °C (or the first firing temperature) at a heating rate (or first heating rate) of 3 °C/min. After that, the temperature was increased from 650 °C to 750 °C (or the second firing temperature) at a heating rate (or second heating rate) of 1 °C/min, and the temperature was maintained at 750 °C for 3 hours. The fired product was pulverized and then washed with water, and a lithium metal composite oxide was thereby obtained.

The volume-based D50 of the lithium metal composite oxide X1 as measured with MT3000II manufactured by MicrotracBEL Corp. while using water as the dispersion medium was 17 µm. Further, from a SEM image of particle cross sections, it was observed that the composite oxide was in the form of secondary particles formed by aggregation of primary particles having an average particle size of 500 nm.

### [Production of Positive Electrode]

The above lithium metal composite oxide was used as the positive electrode active material. A positive electrode mixture slurry was prepared by mixing the positive electrode active material, acetylene black, and polyvinylidene fluoride (PVdF) in a solid mass ratio of 98:1:1, and using N-methyl-2-pyrrolidone (NMP) as the dispersion medium. The positive electrode mixture slurry was applied to both sides of a positive electrode core made of aluminum foil to form a coating, and the coating was dried and compressed. After that, the positive electrode core was cut into a predetermined electrode size to thereby obtain a positive electrode having a positive electrode mixture layer formed on both sides of the positive electrode core.

In this Example, the positive electrode mixture slurry was applied intermittently to provide, at eight positions, exposed portions sequentially arranged in a row in the longitudinal direction of the positive electrode at one widthwise end of the positive electrode. The intervals between the exposed portions were set in accordance with the lead arrangement (or layout) described further below. The ratio of the minimum interval between the exposed portions to the maximum interval between the exposed portions was approximately 90 %. The positive electrode had a length of 3000 mm and a width of 65 mm, and each exposed portion had a width of 10 mm. Each of the first to third exposed portions as counted from the inner periphery side of the electrode assembly had a length of 9 mm, and each of the fourth to eighth exposed portions had a length of 30 mm. The average length (L1) of the first to third exposed portions constituting the first group of exposed portions was 9 mm, and the average length (L2) of the fourth to eighth exposed portions constituting the second group of exposed portions was 30 mm.

### [Production of Negative Electrode]

As the negative electrode active material, a mixture obtained by mixing natural graphite and a silicon-containing material (i.e., a composite material in which a fine Si phase is dispersed in a silicon oxide phase) in a mass ratio of 98:2 was used. A negative electrode mixture slurry was prepared by mixing the negative electrode active material, sodium carboxymethyl cellulose (CMC-Na), and a dispersion of styrene-butadiene rubber (SBR) in a solid mass ratio of 100:1:1, and using water as the dispersion medium. The negative electrode mixture slurry was applied to both sides of a negative electrode core made of copper foil, and the applied coating was dried and then rolled using a roller. The resulting product was cut into a predetermined electrode size, and a negative electrode having a negative electrode mixture layer formed on both sides of the negative electrode core was thereby obtained. In a part of the negative electrode, there was provided an exposed portion where the surface of the negative electrode core was exposed.

### [Preparation of Non-Aqueous Electrolyte Solution]

Into a mixed solvent prepared by mixing ethylene carbonate (EC), methyl ethyl carbonate (MEC), and dimethyl carbonate (DMC) in a volume ratio of 3:3:4 (at 25 °C), LiPF₆ was dissolved to a concentration of 1.2 mol/L, and a non-aqueous electrolyte solution was thereby prepared.

### [Production of Test Cell]

Aluminum leads were welded to the exposed portions of the above positive electrode, and a nickel lead was welded to the exposed portion of the above negative electrode. The positive electrode and the negative electrode were wound in a spiral shape with an interposed separator made of polyolefin to thereby produce a spiral-type electrode assembly having a diameter of 40 mm. At that time, the positive electrode was wound such that the first group of exposed portions of the positive electrode was located closer to the winding axis of the electrode assembly than was the second group of exposed portions. This electrode assembly was housed in a bottomed cylindrical outer can, and after injecting the above non-aqueous electrolyte solution therein, the opening of the outer can was sealed with a sealing assembly to obtain a test cell.

In this Example, a total of eight positive electrode leads welded to the exposed portions in a one-to-one manner were laid out in four directions of 90°, 180°, 270°, and 360° around the central axis of the electrode assembly.

### <Examples 2 to 4 and Comparative Examples 1 to 3>

A positive electrode, an electrode assembly, and a test cell were produced in the same manner as in Example 1, except that the lengths of the exposed portions of the positive electrode were changed to the lengths shown in Table 1.

Each of the test cells of the Examples and Comparative Examples was subjected to performance evaluation by the methods described below, and the evaluation results were as shown in Table 1.

### [Evaluation of Gap between Electrode Plates]

In a temperature environment of 25 °C, each test cell was charged at a constant current of 0.3 It until the battery voltage reached 4.2 V, and then charged at a constant voltage of 4.2 V until the current value reached 0.02 It. After that, the test cell was discharged at a constant current of 0.5 It until the battery voltage reached 2.5 V. Using this charging and discharging process as one cycle, 200 cycles were performed. Subsequently, a CT image of an upper part of the electrode assembly was obtained. Based on the CT image, presence or absence of a gap between the electrode plates of the electrode assembly was checked, and when the gap was present, its size (i.e., the maximum radial length of the gap) was checked.

### [Evaluation of Lead Arrangement Defect Rate]

When forming the spiral electrode assembly structure using the positive electrodes of the Examples and Comparative Examples, the percentage of electrode assemblies in which the above-described lead arrangement (or layout) could not be achieved (i.e., the defect rate) was determined.

**[Table 1]**

| | First group of exposed portions | | | | Second group of exposed portions | Evaluations | |
|---|---|---|---|---|---|---|---|
| | 1st [mm] | 2nd [mm] | 3rd [mm] | L1 [mm] | L2 [mm] | Gap between electrode plates [µm] | Defect rate [%] |
| Example 1 | 9 | 9 | 9 | 9 | 30 | 5 | 2 |
| Example 2 | 20 | 20 | 20 | 20 | 30 | 20 | 0 |
| Example 3 | 9 | 15 | 20 | 15 | 30 | 5 | 0 |
| Example 4 | 20 | 15 | 9 | 15 | 30 | 10 | 0 |
| Comparative Example 1 | 40 | 40 | 40 | 40 | 30 | 150 | 0 |
| Comparative Example 2 | 20 | 20 | 20 | 20 | 15 | 20 | 5 |
| Comparative Example 3 | 9 | 9 | 9 | 9 | 9 | 5 | 12 |

As shown in Table 1, a gap between the electrode plates was less likely to occur in all of the Examples than in Comparative Example 1. It is understood that occurrence of a gap between the electrode plates can be effectively suppressed when the average length (L1) of the exposed portions constituting the first group of exposed portions is smaller than the average length (L2) of the exposed portions constituting the second group of exposed portions. Furthermore, in Comparative Examples 2 and 3, the lead arrangement defect rate increased. According to the configuration of the Examples, occurrence of a gap between electrode plates constituting the electrode assembly can be effectively suppressed, and an intended lead arrangement can be easily realized.

The present disclosure is further illustrated by the following embodiments.

Configuration 1: A secondary battery comprising an electrode assembly which includes a positive electrode, a negative electrode, and a separator, and in which the positive electrode and the negative electrode are wound with the separator interposed, wherein: the positive electrode has an elongate positive electrode core and a positive electrode mixture layer provided on the positive electrode core; at a widthwise end part of the positive electrode, exposed portions where a surface of the positive electrode core is exposed are provided at four or more positions spaced apart from each other in a longitudinal direction; the exposed portions include a first group of exposed portions composed of first to third exposed portions as counted from an inner periphery side of the electrode assembly, and a second group of exposed portions composed of fourth and subsequent exposed portions; and an average length of the first group of exposed portions is smaller than an average length of the second group of exposed portions.

Configuration 2: The secondary battery according to Configuration 1, wherein the first group of exposed portions is provided within a length range of less than or equal to 40 % of a length of the positive electrode from a firstly-wound end of the positive electrode, and a ratio of a minimum interval between the exposed portions constituting the first group of exposed portions to a maximum interval between those exposed portions is greater than or equal to 80 %.

Configuration 3: The secondary battery according to Configuration 2, wherein number of exposed portions constituting the second group of exposed portions is greater than or equal to 3 and less than or equal to 10, and a ratio of a minimum interval between the exposed portions constituting the first and second groups of exposed portions to a maximum interval between those exposed portions is greater than or equal to 80 %.

Configuration 4: The secondary battery according to any one of Configurations 1 to 3, wherein a diameter of the electrode assembly is greater than or equal to 40 mm and less than or equal to 100 mm.

Configuration 5: The secondary battery according to any one of Configurations 1 to 4, wherein an average length of the first group of exposed portions is greater than or equal to 9 mm and less than or equal to 20 mm.

Configuration 6: The secondary battery according to any one of Configurations 1 to 5, wherein an average length of the second group of exposed portions is greater than or equal to 25 mm and less than or equal to 40 mm.

Configuration 7: The secondary battery according to any one of Configurations 1 to 6, wherein a maximum length of the first group of exposed portions is less than or equal to 25 mm.

### REFERENCE SIGNS LIST

1 cylindrical battery; 10 electrode assembly; 11 positive electrode; 12 positive electrode lead; 13 positive electrode core; 14 positive electrode mixture layer; 14a first region; 14b second region; 15 exposed portion; 20 outer can; 21 side wall; 22 can bottom; 23 grooved portion; 30 sealing assembly; 31 cap; 32 current collector plate; 32a, 33a opening; 32b projection; 33 gasket; 40 upper insulating plate; 41 first insulating plate; 42 second insulating plate

## Claims

1. A secondary battery comprising an electrode assembly which includes a positive electrode, a negative electrode, and a separator, and in which the positive electrode and the negative electrode are wound with the separator interposed, wherein
the positive electrode has an elongate positive electrode core and a positive electrode mixture layer provided on the positive electrode core, and at a widthwise end part of the positive electrode, exposed portions where a surface of the positive electrode core is exposed are provided at four or more positions spaced apart from each other in a longitudinal direction,
the exposed portions include a first group of exposed portions composed of first to third exposed portions as counted from an inner periphery side of the electrode assembly, and a second group of exposed portions composed of fourth and subsequent exposed portions, and
an average length of the exposed portions constituting the first group of exposed portions is smaller than an average length of the exposed portions constituting the second group of exposed portions.

2. The secondary battery according to claim 1, wherein
the first group of exposed portions is provided within a length range of less than or equal to 40 % of a length of the positive electrode from a firstly-wound end of the positive electrode, and
a ratio of a minimum interval between the exposed portions constituting the first group of exposed portions to a maximum interval between those exposed portions is greater than or equal to 80 %.

3. The secondary battery according to claim 2, wherein
number of exposed portions constituting the second group of exposed portions is greater than or equal to 3 and less than or equal to 10, and
a ratio of a minimum interval between the exposed portions constituting the first and second groups of exposed portions to a maximum interval between those exposed portions is greater than or equal to 80 %.

4. The secondary battery according to any one of claims 1 to 3, wherein
a diameter of the electrode assembly is greater than or equal to 15 mm and less than or equal to 100 mm.

5. The secondary battery according to claim 4, wherein
an average length of the exposed portions constituting the first group of exposed portions is greater than or equal to 9 mm and less than or equal to 20 mm.

6. The secondary battery according to claim 5, wherein
an average length of the exposed portions constituting the second group of exposed portions is greater than or equal to 25 mm and less than or equal to 40 mm.

7. The secondary battery according to claim 6, wherein
a maximum length of the exposed portions constituting the first group of exposed portions is 25 mm.
